# EUROPÄISCHE PATENTANMELDUNG

(11) **EP 4 782 617 A1**
(43) Veröffentlichungstag der Anmeldung: **29.07.2026**
(21) Anmeldenummer: 25153882.3
(22) Anmeldetag: 24.01.2025
(51) Int. Cl.: E03C 1/08, G05D 7/01

(54) **SANITÄRES EINSETZTEIL MIT EINER REDUZIERSTUFE, DIE EINEN SCHEIBENFÖRMIGEN, ELASTISCH DEFORMIERBAREN REGELKÖRPER AUFWEIST**

(71) Anmelder: Neoperl GmbH, 79379 Müllheim (DE)
(72) Erfinder: Riek, Lennard, 79189 Bad Krozingen (DE); Moss, Luke, Herefordshire, HR9 5UB (GB); Seoung-Eun Kim, Seoung-Eun, 79189 Bad Krozingen (DE)
(74) Vertreter: Mertzlufft-Paufler, Cornelius

(57) **Zusammenfassung**

Der Erfindung liegt die Aufgabe zugrunde, mittels einem sanitären Einsetzteil (1) mit einem Regelprofil 4 und einem elastisch deformierbaren und auf wenigstens zwei Regelvorsprüngen (12, 13) abgestützten und von einem Vorsprung (5) aufgenommenen Regelkörper (3) eine geräuschverminderte Durchflussmengenregulierung zu ermöglichen.

## Beschreibung

Die Erfindung betrifft ein sanitäres Einsetzteil, mit einer Reduzierstufe, die einen scheibenförmigen, elastisch deformierbaren Regelkörper aufweist, der quer zu seiner Scheibenform mit einem Regelprofil zu einer Reduktion einer durch die Reduzierstufe strömenden Wassers zusammenwirkt.

Die Erfindung betrifft weiterhin ein sanitäres Einsetzteil, mit einer Reduzierstufe, die einen scheibenförmigen, elastisch deformierbaren Regelkörper aufweist, der quer zu seiner Scheibenform mit einem Regelprofil zu einer Reduktion einer durch die Reduzierstufe strömenden Wassers zusammenwirkt, wobei der Regelkörper quer zu seiner Scheibenform auf einen Vorsprung aufgesteckt ist.

Die Erfindung betrifft ferner ein sanitäres Einsetzteil, mit einer Reduzierstufe, die einen scheibenförmigen, elastisch deformierbaren Regelkörper aufweist, der quer zu seiner Scheibenform mit einem Regelprofil zu einer Reduktion einer durch die Reduzierstufe strömenden Wassers zusammenwirkt, wobei das Regelprofil wenigstens einen Regelvorsprung aufweist, der an seinem Kontaktende eine Kontaktfläche bereitstellt.

Die Erfindung betrifft schließlich ein sanitäres Einsetzteil, mit einer Reduzierstufe, die einen scheibenförmigen, elastisch deformierbaren Regelkörper aufweist, der quer zu seiner Scheibenform mit einem Regelprofil zu einer Reduktion einer durch die Reduzierstufe strömenden Wassers zusammenwirkt, wobei das Regelprofil wenigstens zwei Regelvorsprünge hat, die von einer Unterlage abragen.

Der Erfindung liegt die Aufgabe zugrunde, ein geräuscharmes Regeln von Wassermengen mit gleichbleibendem Regelverhalten über ein kompaktes sanitäres Einsetzteil mit deformierbarem Regelkörper zu ermöglichen.

Sanitäre Einsetzteile mit deformierbaren Regelkörpern zum insbesondere druckgesteuerten Regeln von Wassermengen sind aus der Praxis bekannt.

Zur Lösung der genannten Aufgabe sind erfindungsgemäß die Merkmale des Anspruchs 1 vorgesehen. Insbesondere wird somit zur Lösung der genannten Aufgabe bei einem sanitären Einsetzteil der eingangs beschriebenen Art erfindungsgemäß vorgeschlagen, dass der Vorsprung an seinem freien Ende eine Haltestruktur aufweist, die den Regelkörper sichert.

Bei dem sanitären Einsetzteil kann es sich beispielsweise um einen Durchflussmengenregler handeln.

Das Regelprofil kann dabei beispielsweise unterschiedlich hohe Regelvorsprünge aufweisen, auf denen der Regelkörper abgestützt ist und über die durch eine Verformung des Regelkörpers durch den Wasserdruck des strömenden Wassers unterschiedliche Druckbereiche mit unterschiedlichen Durchflussmengen ausgebildet werden können.

Besonders vorteilhaft kann dabei sein, dass ein durch die unterschiedlichen Drücke des strömenden Wassers bedingtes Verrutschen und/oder ein Herausrutschen des Regelkörpers durch eine Rückströmung über das freie Ende des Vorsprungs hinweg durch die Haltestruktur verhinderbar ist.

Bei einer weiteren vorteilhaften Ausgestaltung der Erfindung kann vorgesehen sein, dass die Haltestruktur als Materialverdickung ausgebildet ist.

Bei dem sanitären Einsetzteil kann es sich beispielsweise um ein Spritzgussteil handeln, wobei die Materialverdickung des Vorsprungs des sanitären Einsetzteils beispielsweise kostengünstig direkt während des Fertigungsprozesses an dem freien Ende des Vorsprungs angespritzt sein kann.

Ferner kann beispielsweise auch vorgesehen sein, dass die Materialverdickung ein von dem Vorsprung separates Element ist, das, beispielsweise kraft-, form- und/oder reibschlüssig, mit der Haltestruktur zusammenwirkt. Somit kann die Materialverdickung beispielsweise ein Innengewinde aufweisen, welches auf ein Außengewinde des Vorsprungs aufgeschraubt werden und entsprechend als Haltestruktur dienen kann.

Besonders vorteilhaft kann durch die Materialverdickung eine Sicherung des Regelkörpers auf vordefinierter Position auf dem Vorsprung erreicht werden, ein Lösen und/oder Herausrutschen des Regelkörpers kann somit kostengünstig verhindert werden. Dies wird insbesondere dann erreicht, wenn die Materialverdickung dicker ist als ein zum Aufstecken des Regelkörpers auf dem Vorsprung notwendiger Innendurchmesser einer Öffnung des Regelkörpers.

Bei einer weiteren vorteilhaften Ausgestaltung der Erfindung kann vorgesehen sein, dass die Haltestruktur beabstandet von einer stromaufwärtigen Seite des Regelkörpers angeordnet ist.

Hierdurch kann vorteilhafterweise ein definiertes Spiel des Regelkörpers auf dem Vorsprung erreicht werden, ohne dass dieser von dem Vorsprung herausrutschen und/oder sich von diesem lösen kann. Beispielsweise kann somit auch erreicht werden, dass sich der Regelkörper in einer definierten Weise in eine Gebrauchsposition bewegen kann, beispielsweise während des ersten Gebrauchs.

Bei einer weiteren vorteilhaften Ausgestaltung kann die Erfindung vorsehen, dass der Regelkörper in wenigstens zwei Orientierungen auf den Vorsprung aufsteckbar ist.

Besonders vorteilhaft kann somit beispielsweise ein versehentlich falsches Aufstecken des Regelkörpers auf dem Vorsprung verhindert werden. Somit kann der Regelkörper zum Aufstecken auf den Vorsprung beispielsweise entlang seiner Längsachse um 180° gedreht werden, ohne dass sich hierdurch eine fehlerhafte Einbauposition einstellt. Eine stromabwärtige Seite des Regelkörpers wird durch das Drehen um 180° sodann zur stromaufwärtigen Seite und umgekehrt. Hierdurch kann ferner im Bereich des Qualitätsmanagements das Poka-Yoke-Prinzip erreicht werden.

Bei einer weiteren vorteilhaften Ausgestaltung der Erfindung kann vorgesehen sein, dass der Vorsprung stromabwärts des freien Endes eine Auflageschulter für den Regelkörper ausbildet, wobei die Auflageschulter zumindest abschnittsweise in das Regelprofil ragt.

Zumindest abschnittsweise kann bedeuten, dass die Auflageschulter zwischen, das Regelprofil aufweisenden, unterschiedlich hohen Regelvorsprüngen ausgebildet ist.

Besonders vorteilhaft kann somit beispielsweise ein verbessertes Regelverhalten erreicht werden, da durch die Auflageschulter eine Vermittlung zwischen den unterschiedlich hohen Regelvorsprüngen ermöglicht ist.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass eine an dem Regelkörper zu einer Aufnahme des Vorsprungs ausgebildete Öffnung mit dem Vorsprung eine Verdrehsicherung gegen ein Drehen des Regelkörpers um den Vorsprung aufweist.

Bei den definierten Merkmalen kann es sich um bereits beschriebene und/oder beanspruchte Merkmale handeln.

Beispielsweise kann dabei vorgesehen sein, dass der Vorsprung eine hexagonale Außenstruktur mit, beispielsweise angeformter, Führungsschiene aufweist, und die Öffnung eine entsprechende angepasste Innenstruktur aufweist. Hierdurch kann, insbesondere aufgrund der Führungsschiene, nicht nur ein Verdrehen des Regelkörpers verhindert, sondern auch eine vereinfachte Montage ermöglicht und eine vorgegebene Montagerichtung des Regelkörpers definiert werden. Es kann hierbei auch vorgesehen sein, dass der Vorsprung eine runde Außenstruktur mit Führungsschiene und die Öffnung ebenfalls eine daran angepasste Innenstruktur aufweist, wobei hierbei durch die Führungsschiene nicht nur ein geführtes Aufbringen des Regelkörpers auf dem Vorsprung ermöglicht, sondern gleichzeitig die Verdrehsicherung selbst gebildet ist. Die Außenstruktur des Vorsprungs kann hingegen beispielsweise auch ohne Führungsschiene und/oder durch andere, von den genannten Ausführungsformen abweichende geometrische Außenstrukturen ausgebildet sein, während die Innenstruktur der Öffnung des Regelkörpers beispielsweise zur Außenstruktur des Vorsprungs abweichende Strukturen aufweisen kann.

Bei einer weiteren vorteilhaften Ausgestaltung kann vorgesehen sein, dass der Regelkörper längs des Vorsprungs verschieblich angeordnet ist.

Unter der Begrifflichkeit "längs des Vorsprungs" kann entlang einer längstens Erstreckung des Vorsprungs verstanden werden. Besonders vorteilhaft ist somit ein Spiel des Regelkörpers vorhanden, sodass sich dieser, beispielsweise während eines ersten Gebrauchs, in eine Gebrauchsstellung verschieben kann. Ein besonderer Vorteil ergibt sich hierbei insbesondere dann, wenn der Vorsprung an seinem freien Ende die oder eine, beispielsweise die bereits beanspruchte, Haltestruktur aufweist.

Ein weiterer Vorteil ergibt sich dadurch, dass somit sichergestellt werden kann, dass sich der Regelkörper lediglich in vordefinierten Freiheitsgraden bewegen kann.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass stromabwärts der Reduzierstufe wenigstens ein Einsatz, der einen Strömungsweg ausfüllt, angeordnet ist.

Bei den definierten Merkmalen kann es sich um bereits beschriebene und/oder beanspruchte Merkmale handeln.

Unter der Begrifflichkeit "stromabwärts der Reduzierstufe" kann verstanden werden, dass das strömende Wasser, nachdem dieses die Reduzierstufe passiert hat, auf den Einsatz trifft.

Besonders vorteilhaft können über den Einsatz beispielsweise Strömungseigenschaften vor einem Auslauf des strömenden Wassers aus dem sanitären Einsetzteils und somit vor dem Austritt aus einer Sanitärarmatur beeinflusst werden.

Beispielsweise kann der Einsatz vor einer Zerlegerstufe ausgebildet sein. Der Einsatz kann somit beispielsweise Bestandteil einer abströmseitigen Auslaufstufe des sanitären Einsetzteils sein.

Bei einer weiteren vorteilhaften Ausgestaltung der Erfindung kann vorgesehen sein, dass der Einsatz ein textiles Flächengebilde aufweist.

Ein überaus positiver Effekt, der durch das textile Flächengebilde stromabwärts der Reduzierstufe erreicht werden kann, liegt darin, dass Geräusche, bedingt durch das strömende Wasser, deutlich reduziert werden können.

Eine weitere vorteilhafte Ausgestaltung der Erfindung kann vorsehen, dass der Einsatz ein Gitter ist, insbesondere wobei das oder ein textiles Flächengebilde an dem Gitter abgestützt ist.

Besonders vorteilhaft kann somit eine entgegen der Strömungsrichtung ausgebildete Abstützung des textilen Flächengebildes gebildet werden. Das textile Flächengebilde kann somit formstabil abgestützt werden und wird nicht aus dem sanitären Einsetzteil ausgespült. Ferner ist die Abstützung durch das Gitter wasserdurchlässig, wodurch der Durchlauf des strömenden Wassers gewährleistet werden kann.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass das Regelprofil wenigstens zwei, vorzugsweise drei, unterschiedlich hohe Regelvorsprünge aufweist.

Bei den definierten Merkmalen kann es sich um bereits beschriebene und/oder beanspruchte Merkmale handeln.

Auf den wenigstens zwei, vorzugsweise drei, Regelvorsprüngen wird vorzugsweise der Regelkörper aufgelegt und von diesen abgestützt.

Unter dem Druck des strömenden Wassers kann sich der elastische Regelkörper derart verformen, dass durch die Regelvorsprünge ein Fluidweg in Form von wenigstens einem Steuerspalt freigelegt und/oder abgesperrt ist, wodurch wiederum vorteilhafterweise durch elastische Verformung des Regelkörpers und die hierdurch bedingte Variierung eines Öffnungsgrades des Steuerspalts die Wassermenge geregelt werden kann. Somit kann durch eine größere lichte Weite des Steuerspalts eine größere Durchflussmenge und durch eine geringere Lichte Weite des Steuerspalts eine kleiner Durchflussmenge des strömenden Wassers erreicht werden.

Es kann vorgesehen sein, dass drei hohe, zueinander benachbarte Regelvorsprünge und zwei kürzere, zueinander benachbarte Regelvorsprünge ausgebildet sind. In einer solchen Ausgestaltung wird der Regelkörper im Unterdruckbereich zumindest abschnittsweise von den hohen Regelvorsprüngen abgestützt. Die lichte Weite des Steuerspalts ist hierbei vergrößert. Dies kann beispielsweise einen Druckbereich von 0,5 bis 1 bar betreffen. Die vergrößerte lichte Weite des Steuerspalts, durch die das strömende Wasser in diesem Druckbereich fließt, kann als Niederdruckkammer bezeichnet werden. Vorteilhafterweise kann hierbei bei geringem Wasserdruck eine große Wassermenge durchgelassen werden, vorzugsweise bis ein Sollwert erreicht ist.

Wird ein Wasserdruck von über einem bar erreicht, verformt sich der elastische Regelkörper in Strömungsrichtung, bis die Abschnitte des Regelkörpers, die nicht von den hohen Regelvorsprüngen abgestützt sind, die kürzeren Regelvorsprünge kontaktieren. Die lichte weite des Steuerspalts verringert sich hierbei bis zu einem von der Höhe der kürzeren Regelvorsprünge definierten Sollwert. Es kann hierbei erreicht werden, dass die Durchflussmenge über einen weiten Druckbereich konstant bleibt.

Es kann gesagt werden, dass der Regelkörper, mindestens im Betrieb, in welchem eine Druckbeaufschlagung durch das strömende Wasser erfolgt, auf wenigstens einem der wenigstens zwei Regelvorsprünge aufliegt. Der wenigstens eine Regelvorsprung bildet somit wenigstens einen Auflagepunkt des Regelkörpers. Beispielsweise kann auch vorgesehen sein, dass der Regelkörper in einem drucklosen Zustand keinen Regelvorsprung kontaktiert. Es kann jedoch auch vorgesehen sein, dass der Regelkörper im drucklosen Zustand wenigstens einen Regelvorsprung kontaktiert.

Unter der Begrifflichkeit "benachbart" kann entlang des Steuerspalts, der sich in Umfangsrichtung des sanitären Einsetzteils erstreckt, verstanden werden.

Bei einer Ausgestaltung der Erfindung kann vorgesehen sein, dass das Regelprofil wenigstens einen Regelvorsprung hat, der kürzer als seine beiden benachbarten Regelvorsprünge ist.

Beispielsweise kann dabei vorgesehen sein, dass das Regelprofil zunächst drei einander benachbarte, gleichhohe Regelvorsprünge, beispielsweise in bereits beschriebener Ausgestaltung, aufweist. Ferner können drei weitere, den hohen Regelvorsprüngen beispielsweise gegenüberliegende, kürzere Regelvorsprünge ausgebildet sein, wobei wenigstens ein Regelvorsprung kürzer ist als seine beiden benachbarten Regelvorsprünge ist. Hierdurch kann vorteilhafterweise eine Optimierung des Durchflusses und demnach des Regelverhaltens erreicht werden.

Bei einer weiteren vorteilhaften Ausgestaltung der Erfindung kann vorgesehen sein, dass zwischen den unterschiedlich hohen Regelvorsprüngen die oder eine Auflageschulter für den Regelkörper ausgebildet ist, insbesondere so dass der Regelkörper über die Auflageschulter zwischen den unterschiedlich hohen Regelvorsprüngen vermittelbar ist.

Besonders vorteilhaft kann somit beispielsweise das Regelverhalten, insbesondere im Hochdruckbereich, verbessert werden.

Bei einer weiteren vorteilhaften Ausgestaltung der Erfindung kann vorgesehen sein, dass eine Summe einer Länge eines zu einem ersten Regelvorsprung benachbarten zweiten Regelvorsprungs und einer Länge eines zu dem ersten Regelvorsprung benachbarten zweiten Regelvorsprungs kleiner ist als eine Länge des ersten Regelvorsprungs.

Hierdurch ergibt sich, dass es wenigstens einen Regelvorsprung gibt, beispielsweise ein mittlerer Regelvorsprung von drei kurzen Regelvorsprüngen, der entsprechend höher ausgebildet ist als seine beiden benachbarten Regelvorsprünge. Da der Regelkörper im Überdruckbereich abschnittsweise von den hohen und abschnittsweise von den kürzeren Regelvorsprüngen abgestützt ist, entsteht in einem Zwischenbereich, in welchem der Regelkörper nicht abgestützt ist, aufgrund des strömenden Wassers ein Luftschall, der mit einer hohen Geräuschentwicklung einhergeht. Um dieser Geräuschentwicklung vorteilhafterweise entgegenzuwirken, wird wenigstens ein Regelvorsprung etwas höher ausgebildet, als benachbarte Regelvorsprünge, sodass der Regelkörper im Überdruckbereich früher in Kontakt mit einer Auflagefläche kommt, wodurch ein Aufschwingungsbereich des Regelkörpers reduziert werden kann. Der Schwingungsbereich des Regelkörpers kann dabei in einen nicht weiter hörbaren Frequenzbereich verschoben werden.

Der kürzeste Regelvorsprung, beispielsweise der zweite oder der dritte Regelvorsprung, kann dabei derart kurz ausgebildet sein, dass dieser keinen Einfluss auf das Regelverhalten, sondern lediglich auf die geringere Geräuschentwicklung hat.

Bei einer weiteren vorteilhaften Ausgestaltung der Erfindung kann vorgesehen sein, dass eine Summe einer Länge eines ersten Regelvorsprungs und einer Länge eines zu dem ersten Regelvorsprung benachbarten zweiten Regelvorsprungs kleiner, insbesondere höchstens halb so groß, ist, als eine Länge eines zu dem ersten Regelvorsprung benachbarten dritten Regelvorsprungs.

Besonders vorteilhaft kann hierdurch, neben der bereits beschriebenen Reduzierung der Geräuschentwicklung, eine Durchflussklasse definiert bestimmt werden, da die Durchflussklasse von dem Verhältnis der Regelvorsprungshöhen zueinander bestimmt werden kann.

Aufgrund der unterschiedlichen Höhen der Regelvorsprünge lassen sich unterschiedliche Abstützpunkte des Regelkörpers entlang dessen Umfangs definieren, wodurch wiederum eine präzise Einstellung einer Regelposition und demnach des Regelverhaltens des Regelkörpers ermöglicht ist.

Bei einer weiteren vorteilhaften Ausgestaltung der Erfindung kann vorgesehen sein, dass das Regelprofil wenigstens einen Regelvorsprung hat, der höher als seine beiden benachbarten Regelvorsprünge ist.

Die Begrifflichkeit "höher" entspricht hierbei der bereits verwendeten Begrifflichkeit "länger". Je höher der Regelvorsprung ist, desto länger ist dieser. Allgemein kann gesagt werden, dass sich die Länge und die Höhe der Regelvorsprünge auf eine Längsrichtung des sanitären Einsetzteils bezieht.

Es ist demnach eine beliebige Variation der Längen beziehungsweise Höhen der benachbarten Regelvorsprünge ermöglicht, über die das Regelverhalten, die Durchflussklasse und/oder die Geräuschentwicklung universal an verschiedene Gegebenheiten angepasst werden kann.

Es kann bei den bereits beschriebenen Möglichkeiten der Ausgestaltung der Regelvorsprünge vorgesehen sein, dass der Regelkörper an den Abschnitten, an denen dieser nicht von einem Regelvorsprung abgestützt ist, unterschiedliche Materialeigenschaften aufweist als an den Stellen, an denen dieser von den Regelvorsprüngen abgestützt ist.

Beispielsweise kann alternativ oder zusätzlich vorgesehen sein, dass die Regelvorsprünge beweglich ausgebildet und die Höhen der Regelvorsprünge individuell einstellbar sind.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass auf der Kontaktfläche eine Erhöhung ausgebildet ist.

Bei den definierten Merkmalen kann es sich um bereits beschriebene und/oder beanspruchte Merkmale handeln.

Die Kontaktfläche kann hierbei einen Abstützbereich für den Regelkörper definieren.

Die, vorzugsweise abgerundete, Erhöhung auf der Kontaktfläche ermöglicht hierbei ein präzises Regelverhalten, da der Regelkörper, beispielsweise bei steigendem Druck, nicht direkt die Kontaktfläche, sondern zunächst die Erhöhung kontaktiert. Es kann mittels der Erhöhung ferner ein Anschlag für eine Betriebsposition des Regelkörpers definiert werden und/oder eine Ausrichtung des Regelkörpers während des Betriebs erreicht werden.

Bei dem Regelvorsprung, der die Kontaktfläche mit der Erhöhung aufweist, kann es sich beispielsweise um einen bereits beschriebenen und/oder beanspruchten hohen Regelvorsprung handeln, so dass der Regelkörper die Erhöhung bereits in geringen Druckbereichen oder in drucklosem Zustand kontaktiert, bevor die Kontaktflächen weiterer Regelvorsprünge bei steigendem Druck kontaktiert werden. Es können auch weitere Kontaktflächen weiterer Regelvorsprünge mit einer Erhöhung ausgebildet sein.

Bei einer weiteren vorteilhaften Ausgestaltung kann vorgesehen sein, dass die Erhöhung nach allen Seiten zu einer Begrenzung der Kontaktfläche beabstandet angeordnet ist.

Es kann hierdurch beispielsweise ein Anpressdruck des Regelkörpers auf der Kontaktfläche oder weiterer Kontaktflächen weiterer Regelvorsprünge reduziert werden, da der Regelkörper zunächst die von der Kontaktfläche beabstandete Erhöhung kontaktiert, Druckstellen am Regelkörper durch weitere Kontaktflächen ohne Erhöhung können reduziert oder gar verhindert werden.

Bei einer weiteren vorteilhaften Ausgestaltung kann vorgesehen sein, dass die Erhöhung einen ersten Kontaktbereich zum Regelköper definiert.

Beispielsweise kann der erste Kontaktbereich oder jeder erste Kontaktbereich einen Flächeninhalt aufweist, der kleiner als ein Flächeninhalt eines Querschnitts des zugehörigen Regelvorsprungs ist.

Der Kontaktbereich kann dabei beispielsweise derart ausgebildet sein, dass ein punktförmiger Kontakt zum Regelkörper ermöglicht ist. Beispielsweise kann auch vorgesehen sein, dass die Erhöhung einen linienförmigen Kontaktbereich zum Regelkörper definiert. Allgemein kann gesagt werden, dass durch den ersten Kontaktbereich die während des Betriebs wirkenden Kräfte primär aufgenommen werden sollen.

Besonders vorteilhaft wird der Regelkörper somit auch bei hohen Drücken am Kontaktpunkt lediglich punktförmig, linienförmig oder anderweitig, beispielsweise ellipsenförmig, belastet, eine Langlebigkeit des Regelkörpers durch eine verbesserte Kraftverteilung mit geringerem Verschleiß kann erreicht werden.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass in der Unterlage wenigstens ein Kanal ausgebildet ist, der in einer Durchströmungsrichtung durch das Regelprofil führt.

Bei den definierten Merkmalen kann es sich um bereits beschriebene und/oder beanspruchte Merkmale handeln.

Die Unterlage kann dabei von einem Grundkörper des sanitären Einsetzteils gebildet sein, von dem die Regelvorsprünge längs des sanitären Einsetzteils abragen.

Es kann vorgesehen sein, dass der Kanal, oder auch mehrere Kanäle, eine Düsenform bilden, wodurch vorteilhafterweise eine Sogwirkung auf den Regelkörper erreicht werden kann. Die Ausrichtung der Düsenform kann beispielsweise in einer Ebene parallel zum Regelkörper ausgebildet sein. Hierdurch können sehr geringe Durchflussmengen erreicht werden.

Ferner ist durch den Kanal ein zusätzlicher Steuerspalt beziehungsweise Regelspalt definiert.

Bei einer weiteren vorteilhaften Ausgestaltung der Erfindung kann vorgesehen sein, dass der Kanal zumindest auf einer Seite beabstandet zu einem benachbarten Regelvorsprung verläuft.

Besonders vorteilhaft ist somit eine Durchströmungsrichtung durch das Regelprofil ermöglicht. Ferner kann ein weiterer Steuer- beziehungsweise Regelspalt definiert werden, über den sich die Durchflussmenge optimieren lässt.

Bei einer weiteren vorteilhaften Ausgestaltung kann die Erfindung vorsehen, dass in dem Kanal ein Regelvorsprung ausgebildet ist.

Dabei kann beispielsweise vorgesehen sein, dass der Regelvorsprung, insbesondere ein hoher Regelvorsprung, mittig in dem Kanal ausgebildet ist und dass dem Regelvorsprung wenigstens ein weiterer Regelvorsprung benachbart ist.

Hierdurch kann eine Optimierung des Durchflusses im Hochdruckbereich erreicht werden.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass eine stromabwärts an die Reduzierstufe anschließende Abflussöffnung eine sich in Strömungsrichtung aufweitende lichte Querschnittsfläche hat.

Bei den definierten Merkmalen kann es sich um bereits beschriebene und/oder beanspruchte Merkmale handeln.

Bei der Abflussöffnung kann es sich um die Öffnung des bereits beschriebenen und/oder beanspruchten Steuerspalts beziehungsweise Regelspalts handeln.

Besonders vorteilhaft kann eine verbesserte Wasserführung des strömenden Wassers durch die sich aufweitende lichte Querschnittsfläche bei gleichzeitiger reduzierter Geräuschentwicklung erreicht werden.

Die lichte Querschnittsfläche kann dabei beispielsweise durch eine konische Form eines Sockels erreicht werden, an dem beispielsweise der oder ein, beispielsweise der bereits beschriebene und/oder beanspruchte Vorsprung, auf dem der Regelkörper aufgenommen ist, angeformt ist. Durch die konische Form des Sockels ist somit eine sich stromabwärts aufweitende Aufprallfläche für das die Reduzierstufe passierte strömende Wasser gebildet.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass eine stromabwärts an die Reduzierstufe anschließende Abflussöffnung eine Einlaufrundung aufweist.

Bei den definierten Merkmalen kann es sich um bereits beschriebene und/oder beanspruchte Merkmale handeln.

Durch die Einlaufrundung können überaus vorteilhaft Strömungsabrisse des strömenden Wassers entgegengewirkt werden, wodurch wiederum eine reduzierte Geräuschentwicklung aufgrund geringerer turbulenter Strömung erreichbar ist. Insbesondere in Kombination mit der bereits beschriebenen und/oder beanspruchten sich aufweitenden, lichten Querschnittsfläche der Abflussöffnung, kann eine weitere Reduzierung der Geräuschentwicklung und verbesserte Strömungseigenschaften können erreicht werden.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass der Regelkörper an seiner dem Regelprofil zugewandten Seite und/oder an seiner dem Regelprofil abgewandten Seite eine abgerundete Außenkante aufweist.

Bei den definierten Merkmalen kann es sich um bereits beschriebene und/oder beanspruchte Merkmale handeln.

Aufgrund der abgerundeten Außenkante des Regelkörpers an seiner dem Regelprofil zugewandten Seite kann die Geräuschentwicklung reduziert werden, da Strömungsabrissen an den Außenkanten entgegengewirkt werden kann. Es kann dabei auch vorgesehen sein, dass zusätzlich auch die Außenkanten an der dem Regelprofil abgewandten Seite abgerundet werden, damit sichergestellt werden kann, dass, falls der Regelkörper versehentlich falsch herum montiert wird, dies keine Auswirkungen auf die Geräuschentwicklung und/oder das Regelverhalten hat.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass sich ein seitlich außerhalb des Regelkörpers liegender Teil eines das Regelprofil tragenden Gehäuses höchstens bis zu einer zuströmseitigen Seite des Regelkörpers und/oder bis zu dem oder einem freien Ende des oder eines Vorsprungs erhebt.

Bei den definierten Merkmalen kann es sich um bereits beschriebene und/oder beanspruchte Merkmale handeln.

Besonders vorteilhaft kann somit erreicht werden, dass Strömungseigenschaften des zuströmenden Wassers und die Geräuschentwicklung durch die Form des Gehäuses beeinflusst werden kann/können, wobei eine größere Variation von Gehäuseformen ermöglicht werden kann, wenn sich das Gehäuse bis zur zuströmseitigen Seite und/oder bis zum freien Ende des Vorsprungs erhebt.

Bei einer weiteren vorteilhaften Ausgestaltung kann die Erfindung vorsehen, dass das Gehäuse mindestens so hoch ist wie ein kürzester Regelvorsprung.

Besonders vorteilhaft kann somit Material eingespart werden, wobei beispielsweise das Gehäuse zusätzlich als Befestigungspunkt in einer Leitung, beispielsweise einer Auslaufstruktur, der oder einer Sanitärarmatur dienen kann, auch wenn das Gehäuse lediglich so hoch ist wie ein kürzester Regelvorsprung.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass ein seitlich außerhalb des Regelkörpers liegender Teil eines das Regelprofil tragenden Gehäuses an seinem Fuß eine zum Regelprofil leitende Kehlung ausbildet.

Bei den definierten Merkmalen kann es sich um bereits beschriebene und/oder beanspruchte Merkmale handeln.

Über die Kehlung kann das zuströmende Wasser in definierter Weise in Richtung des Regelprofils geführt werden, wodurch mittels der Kehlung wiederum die Geräuschentwicklung deutlich reduziert werden kann. Dies liegt daran, dass turbulente Strömungen durch die Kehlung weitestgehend neutralisiert werden können. Die Kehlung weist dabei vorzugsweise einen vergrößerten Radius auf.

Alternativ oder zusätzlich sind zur Lösung der genannten Aufgabe erfindungsgemäß die Merkmale des nebengeordneten, auf das oder ein sanitäres Einsetzteil gerichteten Anspruchs vorgesehen. Insbesondere wird somit zur Lösung der genannten Aufgabe bei dem oder einem sanitären Einsetzteil der eingangs beschriebenen Art erfindungsgemäß vorgeschlagen, dass ein federelastisches Element ausgebildet ist, das den Regelkörper beaufschlagt und nach erfolgter Belastung wieder in eine Ausgangslage positioniert.

Bei den definierten Merkmalen kann es sich um bereits beschriebene und/oder beanspruchte Merkmale handeln.

Dabei kann beispielsweise vorgesehen sein, dass das federelastische Element stromabwärts des Regelkörpers von dem oder einem, beispielsweise dem bereits beschriebenen und/oder beanspruchten, den Regelkörper aufnehmenden Vorsprung aufgenommen ist. Besonders vorteilhaft kann über die Federsteifigkeit das Regelverhalten zusätzlich beeinflusst und/oder angepasst werden. Ein weiterer Vorteil kann sich beispielsweise auch dadurch ergeben, dass der Regelkörper durch die Federrückstellkraft im drucklosen Zustand in kontrollierter und geführter Weise zu der Ausgangslage bewegt werden kann, ein versehentliches "hängenbleiben" des Regelkörpers außerhalb der Ausgangslage kann vorteilhafterweise verhindert werden.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt, in jeweils stark vereinfachter Darstellung,
- Fig. 1: eine zweidimensionale Prinzipdarstellung (links) und einer Seitenansicht (rechts) eines erfindungsgemäßen, sanitären Einsetzteils mit einem Regelkörper, der auf einem mit einer hexagonalen Außenstruktur und einer Führungsschiene ausgebildeten Vorsprung aufgenommen ist, wobei die Außenstruktur und die Führungsschiene als Verdrehsicherung dienen,
- Fig. 2: eine zweidimensionale Prinzipdarstellung eines erfindungsgemäßen, sanitären Einsetzteils gemäß Fig. 1, wobei der Vorsprung mit einer runden Außenstruktur und einer Führungsschiene zur Verdrehsicherung ausgebildet ist,
- Fig. 3: eine zweidimensionale Prinzipdarstellung eines erfindungsgemäßen, sanitären Einsetzteils mit einer Reduzierstufe und einem Regelprofil, wobei ein Vorsprung für den Regelkörper ausgebildet ist, wobei der Vorsprung an seinem freien Ende eine Haltestruktur aufweist,
- Fig. 4: eine zweidimensionale Prinzipdarstellung eines erfindungsgemäßen, sanitären Einsetzteils gemäß Fig. 3 mit im Vergleich zu Fig. 3 unterschiedlicher Haltestruktur,
- Fig. 5: eine zweidimensionale Prinzipdarstellung eines erfindungsgemäßen, sanitären Einsetzteils gemäß Fig. 4 mit im Vergleich zu Fig. 3 und 4 unterschiedlicher Haltestruktur,
- Fig. 6: eine zweidimensionale Prinzipdarstellung eines erfindungsgemäßen, sanitären Einsetzteils gemäß Fig. 5 mit im Vergleich zu Fig. 3 bis 5 unterschiedlicher Haltestruktur,
- Fig. 7: eine zweidimensionale Prinzipdarstellung eines erfindungsgemäßen, sanitären Einsetzteils im Vergleich zu Fig. 3 bis 6 unterschiedlicher Haltestruktur,
- Fig. 8: eine zweidimensionale Prinzipdarstellung eines erfindungsgemäßen, sanitären Einsetzteils mit im Vergleich zu Fig. 3 bis 7 unterschiedlicher Haltestruktur,
- Fig. 9: eine zweidimensionale Prinzipdarstellung eines erfindungsgemäßen, sanitären Einsetzteils mit im Vergleich zu Fig. 3 bis 7 unterschiedlicher Haltestruktur,

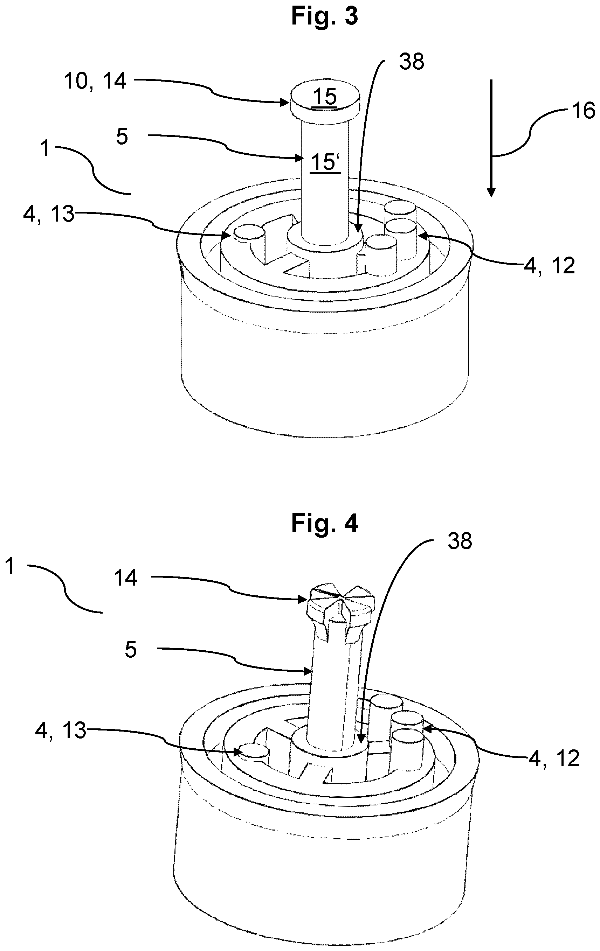

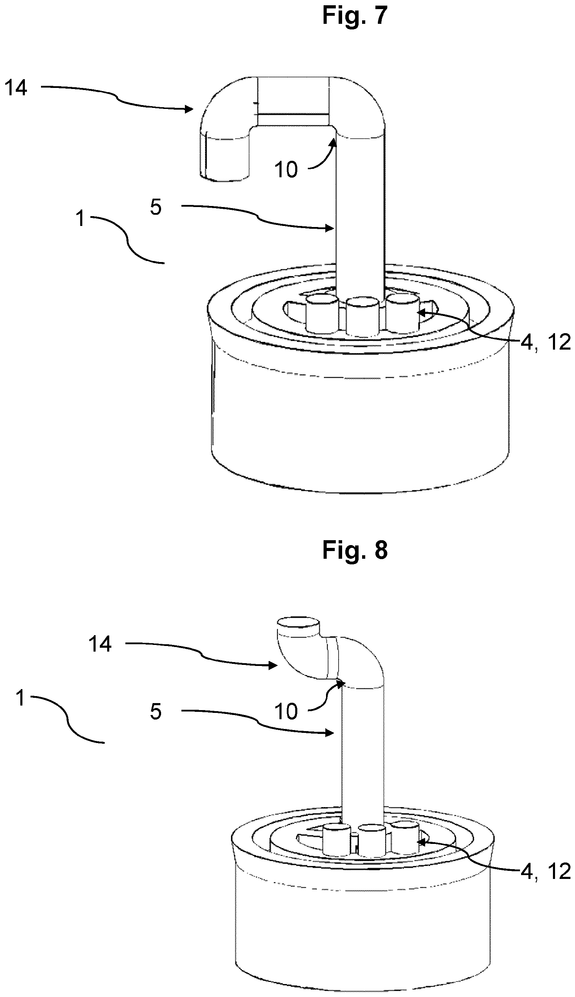

- Fig. 8: eine zweidimensionale Prinzipdarstellung eines erfindungsgemäßen, sanitären Einsetzteils gemäß Fig. 7 mit im Vergleich zu Fig. 3 bis 7 unterschiedlicher Haltestruktur,

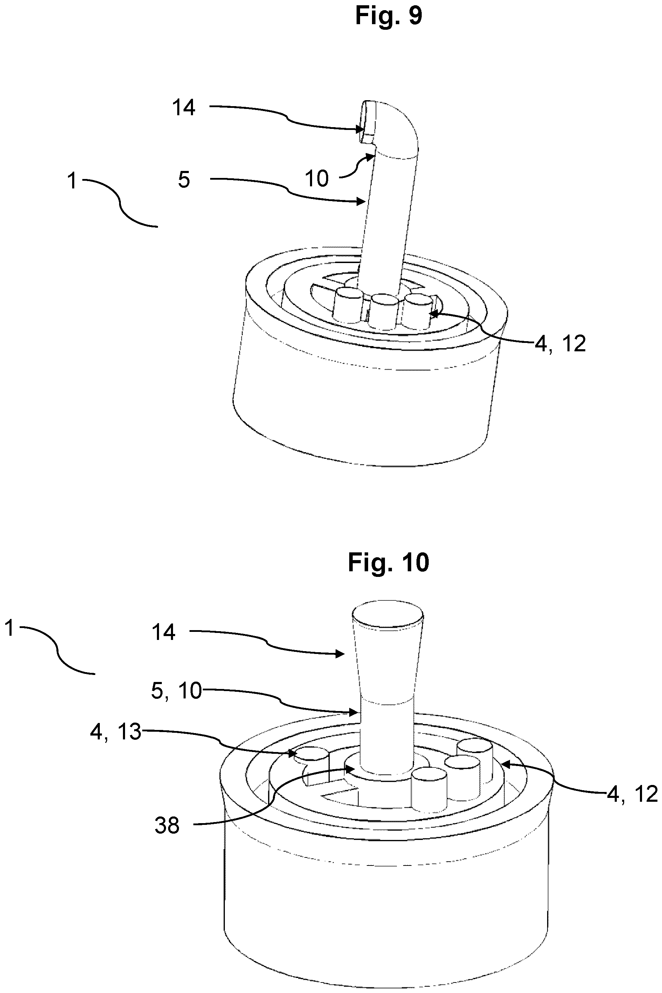

- Fig. 9: eine zweidimensionale Prinzipdarstellung eines erfindungsgemäßen, sanitären Einsetzteils mit im Vergleich zu Fig. 3 bis 8 unterschiedlicher Haltestruktur,
- Fig. 10: eine zweidimensionale Prinzipdarstellung eines erfindungsgemäßen, sanitären Einsetzteils mit im Vergleich zu Fig. 3 bis 9 unterschiedlicher Haltestruktur,

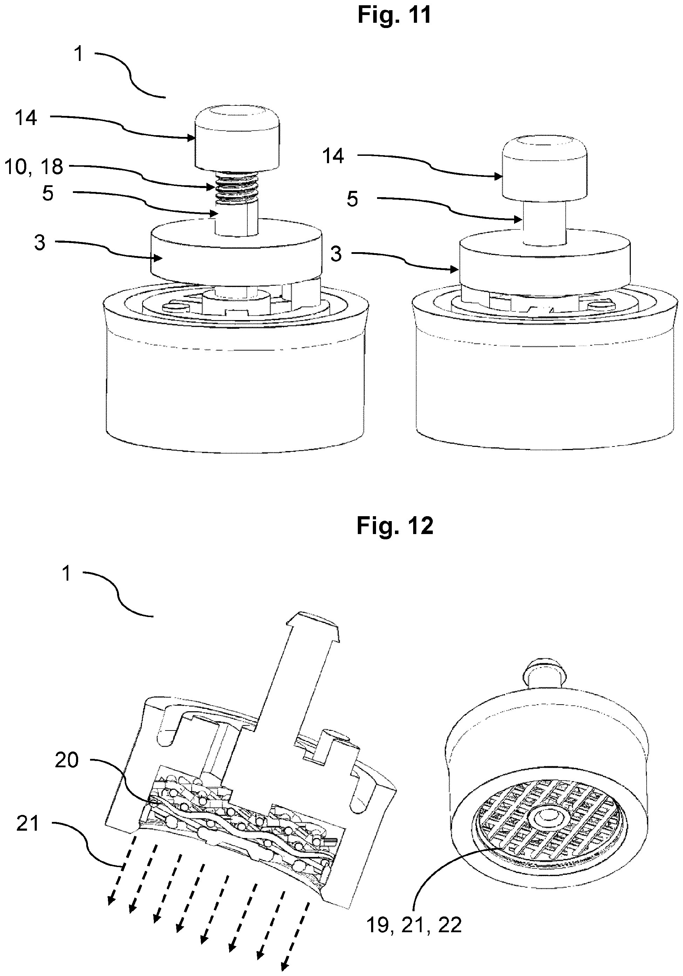

- Fig. 11: ein weiteres Ausführungsbeispiel eines erfindungsgemäßen sanitären Einsetzteils in einer zweidimensionalen Prinzipdarstellung mit einer auf dem freien Ende des Vorsprungs angeschraubten Haltestruktur,
- Fig. 12: ein erfindungsgemäßes sanitäres Einsetzteil in einer zweidimensionalen Schnittdarstellung, wobei stromabwärts einer Reduzierstufe ein textiles Flächengebilde angeordnet ist,

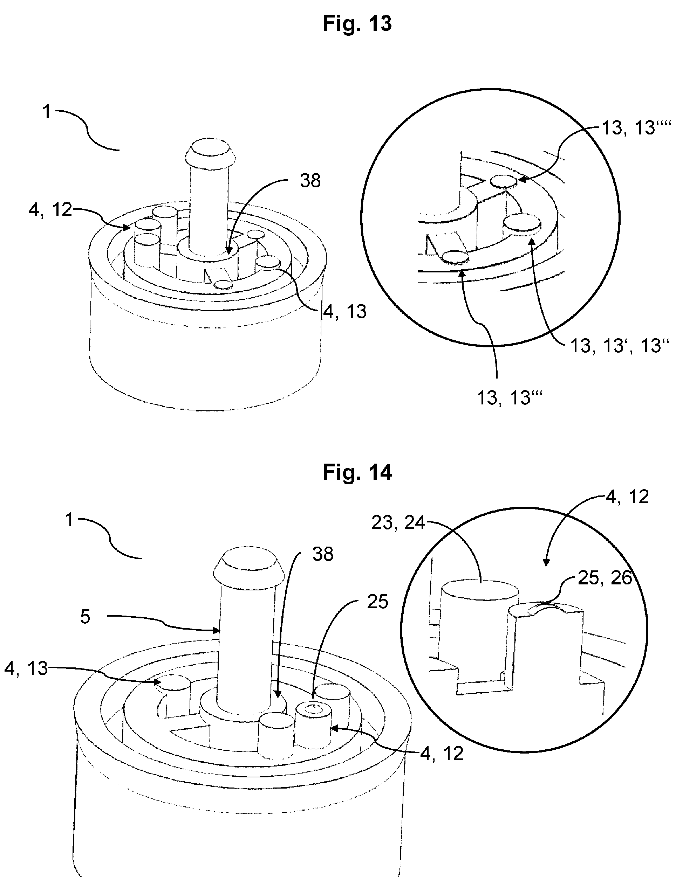

- Fig. 13: ein erfindungsgemäßes sanitäres Einsetzteil in einer Prinzipdarstellung mit unterschiedlich hohen Regelvorsprüngen,
- Fig. 14: ein erfindungsgemäßes sanitäres Einsetzteil in einer Prinzipdarstellung, wobei ein Regelvorsprung des Regelprofils an seinem Kontaktende eine Kontaktfläche bereitstellt, auf der eine Erhöhung ausgebildet ist,

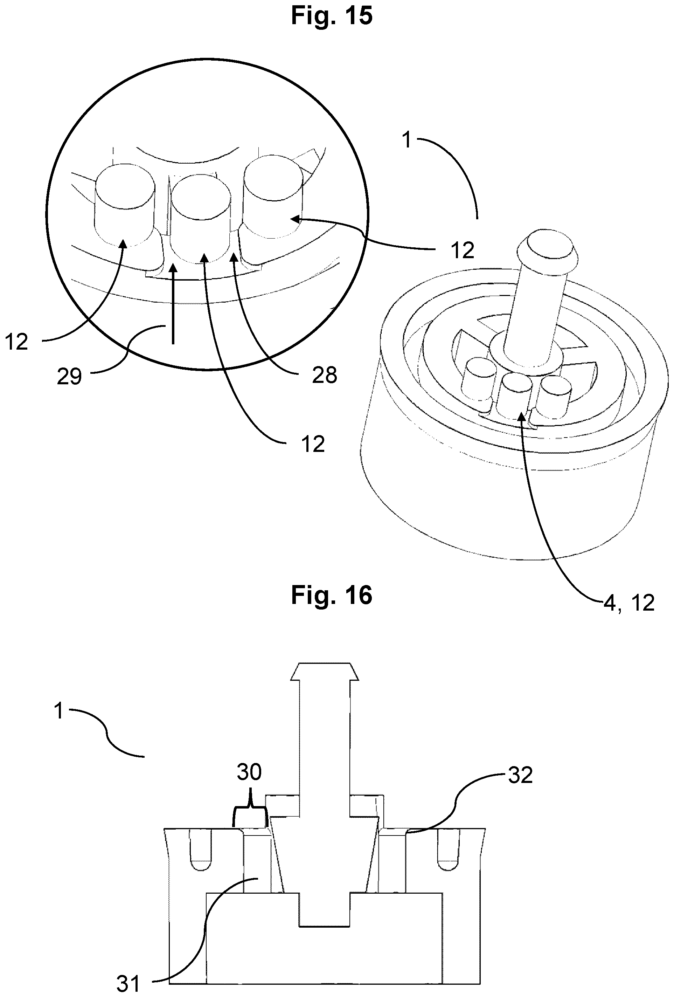

- Fig. 15: ein erfindungsgemäßes sanitäres Einsetzteil in einer Prinzipdarstellung mit Regelvorsprüngen, die von einer Unterlage abragen, wobei in der Unterlage ein Kanal ausgebildet ist, der in einer Durchströmungsrichtung durch das Regelprofil führt,
- Fig. 16: ein erfindungsgemäßes sanitäres Einsetzteil in einer Prinzipdarstellung, wobei eine stromabwärts an die Reduzierstufe eine Abflussöffnung mit einer sich in Strömungsrichtung aufweitenden, lichten Querschnittsfläche, wobei die Abflussöffnung eine Einlaufrundung aufweist,

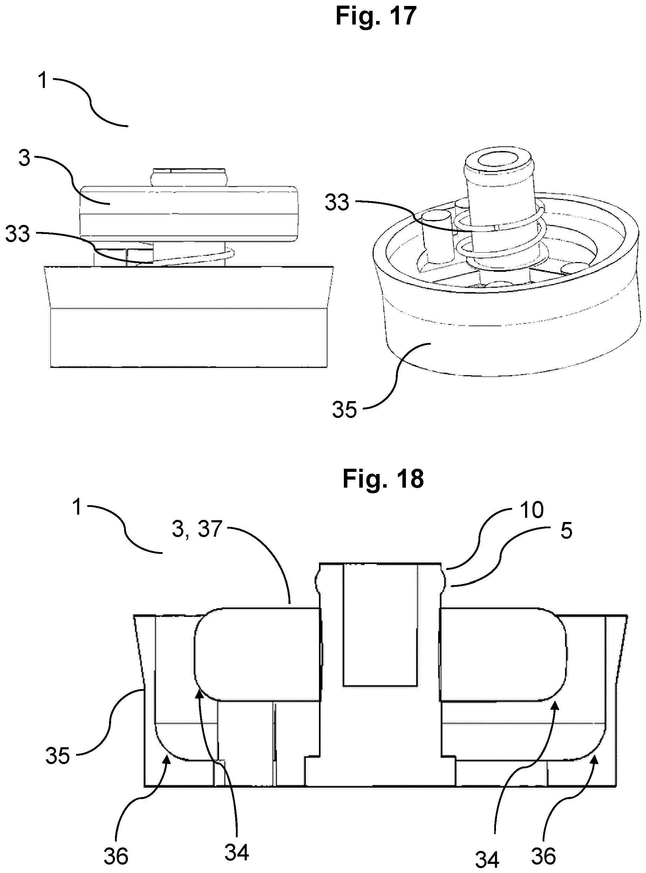

- Fig. 17: ein erfindungsgemäßes sanitäres Einsetzteil in einer Prinzipdarstellung, wobei ein federelastisches Element ausgebildet ist, das den Regelkörper beaufschlagt,
- Fig. 18: ein erfindungsgemäßes sanitäres Einsetzteil in einer Prinzipdarstellung, wobei der Regelkörper abgerundete Außenkanten aufweist.

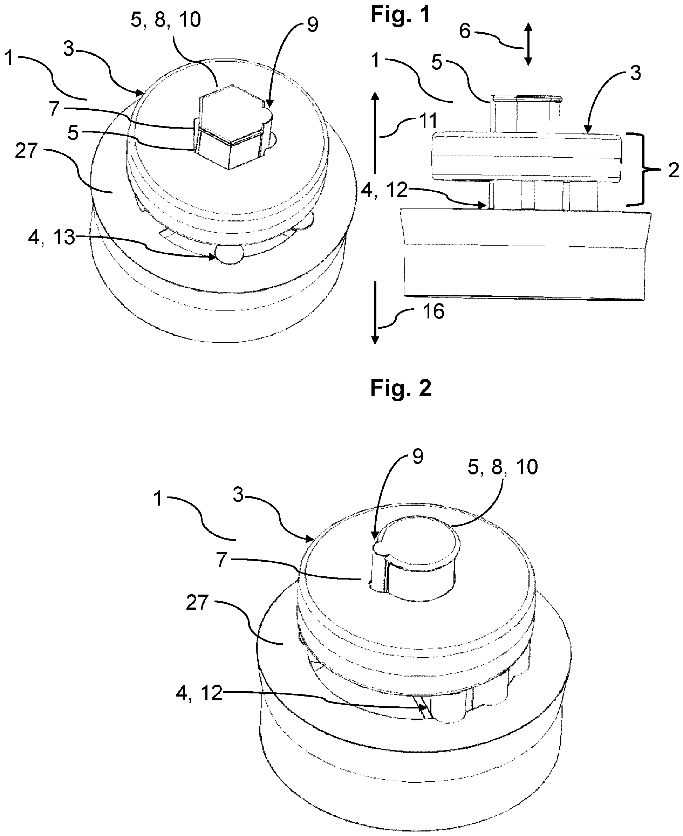

Fig. 1 zeigt ein im Ganzen mit 1 bezeichnetes sanitäres Einsetzteil mit einer Reduzierstufe 2, die einen scheibenförmigen, elastisch deformierbaren Regelkörper 3 aufweist, der quer zu seiner Scheibenform mit einem Regelprofil 4 zu einer Reduktion einer durch die Reduzierstufe 2 strömenden Wassers zusammenwirkt. Der Regelkörper 3 ist dabei quer zu seiner Scheibenform auf einen Vorsprung 5 aufgesteckt. Quer zu seiner Scheibenform bedeutet hierbei entlang einer Längserstreckung 6 des sanitären Einsetzteils 1.

Der Regelkörper 3 hat ferner eine Öffnung 7, über die der Vorsprung 5 aufgenommen werden kann. Im gezeigten Ausführungsbeispiel hat der Vorsprung 5 eine hexagonale Außenstruktur 8 mit einer Führungsschiene 9, die ein Aufbringen des Regelkörpers 3 erleichtert. Die Öffnung 7 des Regelkörpers 3 ist, zumindest in diesem Ausführungsbeispiel, an die Außenstruktur 8 und die Führungsschiene 9 angepasst.

Die Öffnung 7 des Regelkörpers 3 und der Vorsprung 5 bilden demnach eine Verdrehsicherung gegen ein Drehen des Regelkörpers 3 um den Vorsprung 5.

Es zeigt sich ferner, dass der Regelkörper in Längsrichtung 6', und somit längs des Vorsprungs 5, verschieblich angeordnet ist, da ein freies Ende 10 des Vorsprungs 5 beabstandet ist von einer stromaufwärtigen Seite 11 des Regelkörpers 3.

Aus Fig. 1 sind ferner drei einander benachbarte, hohe Regelvorsprünge 12 ersichtlich, auf denen der Regelkörper 3 abgestützt ist. Den drei hohen Regelvorsprüngen 12 sind wiederum gegenüberliegende, kürzere Regelvorsprünge 13 ausgebildet (siehe auch Fig. 3 bis 6 und 13). Sämtliche Regelvorsprünge 12, 13 ragen dabei von einer Unterlage 27 des sanitären Einsetzteils 1 ab.

Fig. 2 zeigt, im Unterschied zum Ausführungsbeispiel gemäß Fig. 1, dass die Außenstruktur 8 des Vorsprungs 5 weitestgehend rund ausgebildet ist, wobei auch hier eine Führungsschiene 9 zum Einschieben des Regelkörpers 3 über die Öffnung 7 dient.

Fig. 3 zeigt ein weiteres, erfindungsgemäßes sanitäres Einsetzteil 1. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Dies gilt analog für sämtliche Figuren.

Der Regelkörper 3 ist zur besseren Darstellbarkeit des sanitären Einsetzteils 1 in Fig. 3 nicht gezeigt. Hingegen ist an dem freien Ende 10 des Vorsprungs eine Haltestruktur 14 ausgebildet, über die der Regelkörper 3 auf dem Vorsprung 5 gesichert wird. Im gezeigten Ausführungsbeispiel ist die Haltestruktur 14 scheibenförmig ausgebildet, wobei ein Außendurchmesser 15 der scheibenförmigen Haltestruktur 14 größer ist als ein Außendurchmesser 15' des Vorsprungs 5. Es kann somit gesagt werden, dass die Haltestruktur 14 als Materialverdickung ausgebildet ist. Es kann ferner gesagt werden, dass die Haltestruktur 14 beabstandet von der stromaufwärtigen Seite 11 des Regelkörpers 3, der, wie bereits erwähnt, im dargestellten Ausführungsbeispiel nicht gezeigt ist, angeordnet ist. Gezeigt sind ferner drei hohe Regelvorsprünge 12 und zwei kurze Regelvorsprünge 13, wobei der zweite, kurze Regelvorsprung 13 in der dargestellten Ebene von dem Vorsprung 5 verdeckt ist. Es kann jedoch gesagt werden, dass das Regelprofil 4 wenigstens zwei unterschiedlich hohe Regelvorsprünge 12, 13 aufweist. Stromabwärts 16 des freien Endes 10 des Vorsprungs 5, an dem die Haltestruktur 14 ausgebildet ist, ist ferner eine Auflageschulter 38 für den hier nicht näher dargestellten Regelkörper 3 ausgebildet, die zumindest abschnittsweise in das Regelprofil 4 ragt. Es zeigt sich, dass die Auflageschulter 38 zwischen den unterschiedlich hohen Regelvorsprüngen 12, 13 ausgebildet ist, so dass der Regelkörper 3 über die Auflageschulter 38 zwischen den unterschiedlich hohen Regelvorsprüngen 12, 13 vermittelbar ist.

Fig. 4 zeigt im Unterschied zu dem vorangegangenen Ausführungsbeispiel ein weiteres, erfindungsgemäßes sanitäres Einsetzteil 1 mit Haltestruktur 14. Die Haltestruktur 14 ist im Vergleich zum Vorsprung 5 ebenfalls als Materialverdickung ausgebildet. Die Haltestruktur 14 weist dabei vier Abschnitte auf, die sich quer zur Längserstreckung 6 des Vorsprungs 5 erstrecken, wobei sich jeder Abschnitt der Haltestruktur 14 in Längserstreckung 6 stromabwärts 16 dem Vorsprung 5, wenn auch nicht vollständig, angleichen.

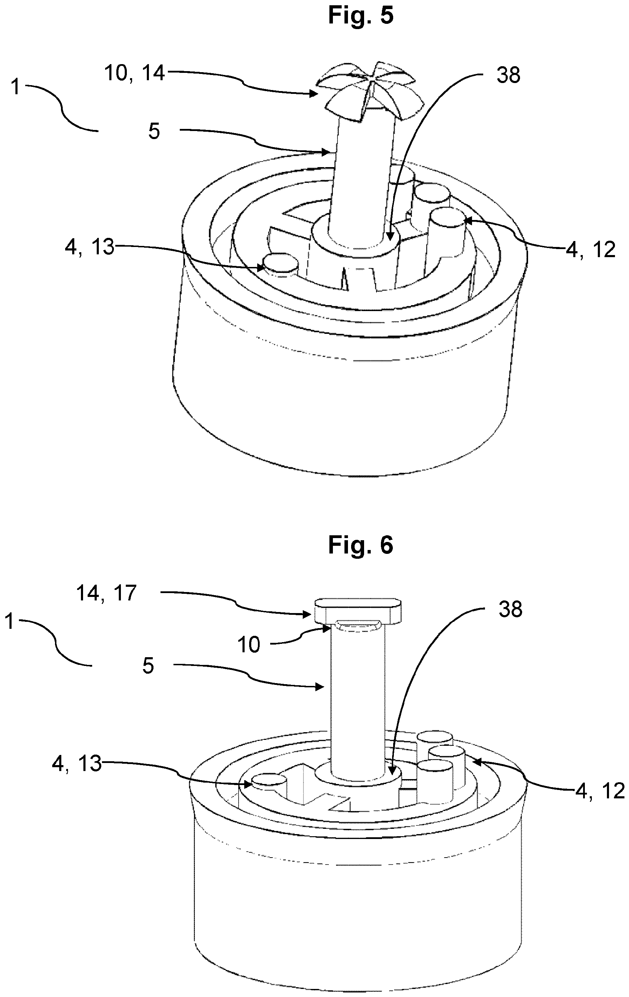

Im Unterschied dazu, sind die vier Abschnitte der Haltestruktur gemäß Fig. 5 leicht stromabwärts 16 gewölbt.

Fig. 6 hingegen zeigt ein weiteres, erfindungsgemäßes sanitäres Einsetzteil mit Haltestruktur 14, wobei die Haltestruktur 14 selbst von einem Querbalken 17 gebildet ist.

Die in Fig. 7 dargestellte Ausführungsform zeigt eine Haltestruktur 14, die zunächst eine Erstreckung quer zur Längserstreckung 6 des Vorsprungs 5 und eine anschließende Erstreckung stromabwärts 16 aufweist.

Im Unterschied dazu, erstreckt sich die in Fig. 8 gezeigte Haltestruktur 14 zunächst quer zur Längserstreckung 6 des Vorsprungs und verläuft anschließend in Richtung der stromaufwärtigen Seite 11. Die Haltestruktur verläuft somit versetzt parallel zum Vorsprung 5. Gehalten wird der Regelkörper 3 dabei, wie auch in Fig. 7, einseitig an dem Abschnitt der Haltestruktur 14, der quer zur Längserstreckung 6 ausgebildet ist.

Das Ausführungsbeispiel nach Fig. 9 unterscheidet sich von dem Ausführungsbeispiel gemäß Fig. 8 zumindest dadurch, dass die Haltestruktur 14 keinen sich zur stromaufwärtigen Seite 11 erstreckenden Abschnitt aufweist.

Die in Fig. 10 dargestellte Haltestruktur 14 ist wiederum am freien Ende 10 des Vorsprungs 5 von einer sich zur stromaufwärtigen Seite 11 aufweitenden, konischen Materialverdickung gebildet.

Ein weiteres Ausführungsbeispiel der Haltestruktur 14 ist in Fig. 11 gezeigt. Hierbei weist der Vorsprung 5 an seinem freien Ende 10 ein Außengewinde 18 auf, welches mit einem hier nicht näher dargestellten Innengewinde der, hier zylindrisch ausgebildeten, Haltestruktur 14, verschraubt werden kann, so dass sich eine Materialverdickung ergibt.

Fig. 12 zeigt ein weiteres, erfindungsgemäßes Ausführungsbeispiel eines sanitären Einsetzteils 1. Im Unterschied zu den vorangehenden Ausführungsbeispielen, ist stromabwärts 16 der Reduzierstufe 2 ein Einsatz 19, der ein textiles Flächengebilde 20 aufweist, angeordnet, wobei der Einsatz 19 einen Strömungsweg 21 ausfüllt. Hierdurch kann die Geräuschentwicklung des strömenden Wassers reduziert werden.

Der Einsatz 19 ist hierbei von einem Gitter 22 gebildet (siehe rechte Darstellung, die eine perspektivische Unteransicht des sanitären Einsetzteils darstellt), wobei das textile Flächengebilde 20 an dem Gitter 22 abgestützt ist.

In Fig. 13 sind unterschiedlich hohe Regelvorsprünge 12, 13 des Regelprofils 4 des erfindungsgemäßen sanitären Einsetzteils 1 dargestellt. Das Regelprofil 4 weist dabei drei einander benachbarte hohe Regelvorsprünge 12 und drei den hohen Regelvorsprüngen 12 gegenüberliegenden, ebenfalls einander benachbarte kurze Regelvorsprünge 13 auf. In der rechten kreisförmig umrandeten Darstellung in Fig. 13 ist zu erkennen, dass ein mittlerer, kurzer Regelvorsprung 13` höher, beziehungsweise länger, ist, als seine beiden benachbarten Regelvorsprünge 13. Dabei kann auch vorgesehen sein, dass die beiden dem mittleren, kurzen Regelvorsprung 13' benachbarten kurzen Regelvorsprünge wiederum zueinander unterschiedliche Höhe aufweisen. Ferner kann in einem nicht näher dargestellten Ausführungsbeispiel der mittlere, kurze Regelvorsprung 13' kürzer ausgebildet sein, als seine beiden benachbarten, kurzen Regelvorsprünge 13. Im gezeigten Ausführungsbeispiel ist der mittlere, kurze Regelvorsprung 13` höher, beziehungsweise länger, als eine Summe der beiden benachbarten Regelvorsprünge 13. Im Umkehrschluss kann gesagt werden, dass eine Summe einer Länge eines zu einem ersten Regelvorsprung 13'', hier der mittlere, kurze Regelvorsprung 13', benachbarten zweiten Regelvorsprungs 13‴ und einer Höhe, beziehungsweise Länge, eines zu dem ersten Regelvorsprung 13'', hier der mittlere Regelvorsprung 13', benachbarten dritten Regelvorsprungs 13ʺʺ kleiner ist als eine Höhe, beziehungsweise Länge, des ersten Regelvorsprungs 13". Sämtliche Kombinationen unterschiedlicher Höhen der Regelvorsprünge 12, 13 zueinander sind dabei denkbar. Es kann somit auch vorgesehen sein, dass die Summe der Länge des ersten Regelvorsprungs 13" und der Länge eines zum ersten Regelvorsprung 13" benachbarten zweiten Regelvorsprungs 13‴ kleiner, insbesondere höchstens halb so groß, ist, als eine Länge des dritten Regelvorsprungs 13ʺʺ. Allgemein kann gesagt werden, dass das Regelprofil 4 gemäß Fig. 13 drei unterschiedlich hohe Regelvorsprünge 12, 13 aufweist, da der mittlere, kurze Regelvorsprung 13' kürzer ist als ein hoher Regelvorsprung 12, wobei ein dem mittleren, kurzen Regelvorsprung 13' benachbarter kurzer Regelvorsprung 13 kürzer ist als der mittlere, kurze Regelvorsprung 13' selbst.

Fig. 14 zeigt im Unterschied zu den vorangehenden Ausführungsbeispielen ein erfindungsgemäßes sanitäres Einsetzteil 1, wobei das Regelprofil 4 wenigstens einen Regelvorsprung 12, 13, hier einen hohen Regelvorsprung 12, aufweist, der an seinem Kontaktende 23 eine Kontaktfläche 24 bereitstellt, wobei auf der Kontaktfläche 24 eine Erhöhung 25 ausgebildet ist. Die Erhöhung 25 ist dabei nach allen Seiten zu einer Begrenzung der Kontaktfläche 24 beabstandet und definiert einen ersten Kontaktbereich 26 zum hier nicht weiter dargestellten Regelkörper 3.

Fig. 15 zeigt im Unterschied zu den vorangehenden Ausführungsbeispielen ein weiteres, erfindungsgemäßes sanitäres Einsetzteil 1, wobei das Regelprofil 4 auch hier wenigstens zwei, hier drei hohe, Regelvorsprünge 12 hat, die von der Unterlage 27 abragen. Ferner zeigt sich, dass in der Unterlage 27 ein Kanal 28 ausgebildet ist, der in einer Durchströmungsrichtung 29 durch das Regelprofil 4 führt. In dem Kanal 28 ist im gezeigten Ausführungsbeispiel ein hoher Regelvorsprung 12 ausgebildet. Es kann ferner gesagt werden, dass der Kanal 28 zumindest auf einer Seite beabstandet zu einem benachbarten Regelvorsprung 12 verläuft.

Fig. 16 zeigt einen Querschnitt eines weiteren, erfindungsgemäßen sanitären Einsetzteils 1, wobei erkennbar ist, dass eine stromabwärts 16 der Reduzierstufe 2 anschließende Abflussöffnung 30 eine Einlaufrundung 32 aufweist und eine sich in Strömungsrichtung, hier stromabwärts 16, aufweitende, lichte Querschnittfläche 31 hat.

Fig. 17 zeigt ein weiteres Ausführungsbeispiel eines sanitären Einsetzteils 1, wobei, im Unterschied zu den vorangegangenen Ausführungsbeispielen, ein federelastisches Element 33 ausgebildet ist, das den Regelkörper 3 beaufschlagt und nach erfolgter Belastung durch das strömende Wasser wieder in eine Ausgangslage positioniert.

Fig. 18 zeigt ein weiteres Ausführungsbeispiel eines sanitären Einsetzteils 1, wobei der Regelkörper 3 an seiner dem Regelprofil 4 zugewandten Seite eine abgerundete Außenkante 34 aufweist. Im gezeigten Ausführungsbeispiel weist jedoch auch die dem Regelprofil 4 abgewandte Seite eine abgerundete Außenkante 34 auf, wodurch der Regelkörper 3 in zwei Orientierungen auf den Vorsprung 5 aufgesteckt werden kann.

Das Regelverhalten ändert sich somit nicht, wenn der Regelkörper 3 verkehrtherum auf den Vorsprung 5 aufgesteckt wird. Ferner bildet ein seitlich außerhalb des Regelkörpers 3 liegender Teil eines das Regelprofil 4 tragenden Gehäuses 35 des sanitären Einsetzteils 1 an seinem Fuß eine zum Regelprofil 4 leitende Kehlung 36. Es ist darüber hinaus zu erkennen, dass sich das Gehäuse 35 höchstens bis zu einer zuströmseitigen Seite 37 des Regelkörpers 3 erhebt. Es kann jedoch auch, wie beispielsweise im Ausführungsbeispiel gemäß Fig. 17 gezeigt, vorgesehen sein, dass das Gehäuse 35 mindestens so hoch ist wie ein kürzester Regelvorsprung 13 und/oder sich bis zu dem freien Ende 10 des Vorsprungs 5 erhebt.

Der Erfindung liegt somit die Aufgabe zugrunde, mittels einem sanitären Einsetzteil 1 mit einem Regelprofil 4 und einem elastisch deformierbaren und auf wenigstens zwei Regelvorsprüngen 12, 13 abgestützten und von einem Vorsprung 5 aufgenommenen Regelkörper 3 eine geräuschverminderte Durchflussmengenregulierung zu ermöglichen.

### Bezugszeichenliste

- 1: sanitäres Einsetzteil
- 2: Reduzierstufe
- 3: Regelkörper
- 4: Regelprofil
- 5: Vorsprung
- 6: Längserstreckung
- 7: Öffnung
- 8: Außenstruktur
- 9: Führungsschiene
- 10: freies Ende
- 11: stromaufwärtige Seite
- 12: hoher Regelvorsprung
- 13: kurzer Regelvorsprung
- 13': mittlerer, kurzer Regelvorsprung
- 13": erster Regelvorsprung
- 13‴: zweiter Regelvorsprung
- 13ʺʺ: dritter Regelvorsprung
- 14: Haltestruktur
- 15: Außendurchmesser
- 15': Außendurchmesser
- 16: stromabwärts
- 17: Querbalken
- 18: Außengewinde
- 19: Einsatz
- 20: textiles Flächengebilde
- 21: Strömungsweg
- 22: Gitter
- 23: Kontaktende
- 24: Kontaktfläche
- 25: Erhöhung
- 26: Kontaktbereich
- 27: Unterlage
- 28: Kanal
- 29: Durchströmungsrichtung
- 30: Abflussöffnung
- 31: Querschnittsfläche
- 32: Einlaufrundung
- 33: federelastisches Element
- 34: Außenkante
- 35: Gehäuse
- 36: Kehlung
- 37: zuströmseitige Seite
- 38: Auflageschulter

## Patentansprüche

1. Sanitäres Einsetzteil (1), mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe strömendes Wasser zusammenwirkt, wobei der Regelkörper (3) quer zu seiner Scheibenform auf einen Vorsprung (5) aufgesteckt ist, **dadurch gekennzeichnet, dass** der Vorsprung (5) an seinem freien Ende (10) eine Haltestruktur (14) aufweist, die den Regelkörper (3) sichert.

2. Sanitäres Einsetzteil (1) nach Anspruch 1, **dadurch gekennzeichnet, dass** die Haltestruktur (14) als Materialverdickung ausgebildet ist.

3. Sanitäres Einsetzteil (1) nach einem der vorangehenden Ansprüche, **dadurch gekennzeichnet, dass** die Haltestruktur (14) beabstandet von einer stromaufwärtigen Seite (11) des Regelkörpers (3) angeordnet ist.

4. Sanitäres Einsetzteil (1) nach einem der vorangehenden Ansprüche, **dadurch gekennzeichnet, dass** der Regelkörper (3) in wenigstens zwei Orientierungen auf den Vorsprung (5) aufsteckbar ist.

5. Sanitäres Einsetzteil (1) nach einem der vorangehenden Ansprüche, **dadurch gekennzeichnet, dass** der Vorsprung (5) stromabwärts (16) des freien Endes (10) eine Auflageschulter (38) für den Regelkörper (3) ausbildet, wobei die Auflageschulter (38) zumindest abschnittsweise in das Regelprofils (4) ragt.

6. Sanitäres Einsetzteil (1) nach dem Oberbegriff von Anspruch 1 oder nach einem der vorangehenden Ansprüche, **dadurch gekennzeichnet, dass** eine an dem Regelkörper (3) zu einer Aufnahme des Vorsprungs (5) ausgebildete Öffnung (7) mit dem Vorsprung (5) eine Verdrehsicherung gegen ein Drehen des Regelkörpers (3) um den Vorsprung (5) aufweist.

7. Sanitäres Einsetzteil (1) nach einem der vorangehenden Ansprüche, **dadurch gekennzeichnet, dass** der Regelkörper (3) längs des Vorsprungs (5) verschieblich angeordnet ist.

8. Sanitäres Einsetzteil (1), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, **dadurch gekennzeichnet, dass** stromabwärts (16) der Reduzierstufe (2) wenigstens ein Einsatz (19), der einen Strömungsweg (21) ausfüllt, angeordnet ist.

9. Sanitäres Einsetzteil (1) nach einem der vorangehenden Ansprüche, **dadurch gekennzeichnet, dass** der Einsatz (19) ein textiles Flächengebilde (20) aufweist.

10. Sanitäres Einsetzteil (1) nach einem der vorangehenden Ansprüche, **dadurch gekennzeichnet, dass** der Einsatz (19) ein Gitter (22) ist, insbesondere wobei das oder eine textiles Flächengebilde (20) an dem Gitter (22) abgestützt ist.

11. Sanitäres Einsetzteil (2), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, **dadurch gekennzeichnet, dass** das Regelprofil (4) wenigstens zwei, vorzugsweise drei, unterschiedlich hohe Regelvorsprünge (12, 13) aufweist.

12. Sanitäres Einsetzteil (1) nach einem der vorangehenden Ansprüche, **dadurch gekennzeichnet, dass** das Regelprofil (4) wenigstens einen Regelvorsprung (12, 13) hat, der kürzer als seine beiden benachbarten Regelvorsprünge (12, 13) ist.

13. Sanitäres Einsetzteil nach einem der vorangehenden Ansprüche, **dadurch gekennzeichnet, dass** zwischen den unterschiedlich hohen Regelvorsprüngen (12, 13) die oder eine Auflageschulter (38) für den Regelkörper (3) ausgebildet ist, insbesondere so dass der Regelkörper (3) über die Auflageschulter (38) zwischen den unterschiedlich hohen Regelvorsprüngen (12, 13) vermittelbar ist.

14. Sanitäres Einsetzteil (1) nach einem der vorangehenden Ansprüche, **dadurch gekennzeichnet, dass** eine Summe einer Länge eines zu einem ersten Regelvorsprung (13") benachbarten zweiten Regelvorsprungs (13‴) und einer Länge eines zu dem ersten Regelvorsprung (13") benachbarten dritten Regelvorsprungs (13ʺʺ) kleiner ist als eine Länge des ersten Regelvorsprungs (13").

15. Sanitäres Einsetzteil (1) nach einem der vorangehenden Ansprüche, **dadurch gekennzeichnet, dass** eine Summe einer Länge eines ersten Regelvorsprungs (13") und einer Länge eines zu dem ersten Regelvorsprung (13") benachbarten zweiten Regelvorsprungs (13‴) kleiner, insbesondere höchstens halb so groß, ist, als eine Länge eines zu dem ersten Regelvorsprungs (13") benachbarten dritten Regelvorsprung (13ʺʺ).

16. Sanitäres Einsetzteil nach einem der vorangehenden Ansprüche, **dadurch gekennzeichnet, dass** das Regelprofil (4) wenigstens einen Regelvorsprung (12, 13, 13", 13‴, 13ʺʺ) hat, der höher als seine beiden benachbarten Regelvorsprünge (12, 13, 13'', 13''', 13ʺʺ) ist.

17. Sanitäres Einsetzteil (1), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, wobei das Regelprofil (4) wenigstens einen Regelvorsprung (12, 13) aufweist, der an seinem Kontaktende (23) eine Kontaktfläche (24) bereitstellt, **dadurch gekennzeichnet, dass** auf der Kontaktfläche (24) eine Erhöhung (25) ausgebildet ist.

18. Sanitäres Einsetzteil (1) nach einem der vorangehenden Ansprüche, **dadurch gekennzeichnet, dass** die Erhöhung (25) nach allen Seiten zu einer Begrenzung der Kontaktfläche (24) beabstandet ist.

19. Sanitäres Einsetzteil (1) nach einem der vorangehenden Ansprüche, **dadurch gekennzeichnet, dass** die Erhöhung (25) einen ersten Kontaktbereich (26) zum Regelkörper (3) definiert.

20. Sanitäres Einsetzteil (1), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, wobei das Regelprofil (4) wenigstens zwei Regelvorsprünge (12, 13) hat, die von einer Unterlage (27) abragen, **dadurch gekennzeichnet, dass** in der Unterlage (27) wenigstens ein Kanal (28) ausgebildet ist, der in einer Durchströmungsrichtung (29) durch das Regelprofil (4) führt.

21. Sanitäres Einsetzteil (1) nach einem der vorangehenden Ansprüche, **dadurch gekennzeichnet, dass** der Kanal (28) zumindest auf einer Seite beabstandet zu einem benachbarten Regelvorsprung (12, 13) verläuft.

22. Sanitäres Einsetzteil (1) nach einem der vorangehenden Ansprüche, **dadurch gekennzeichnet, dass** in dem Kanal (28) ein Regelvorsprung (12, 13) ausgebildet ist.

23. Sanitäres Einsetzteil (1), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, **dadurch gekennzeichnet, dass** eine stromabwärts (16) an die Reduzierstufe (2) anschließende Abflussöffnung (30) eine sich in Strömungsrichtung aufweitende lichte Querschnittsfläche (31) hat.

24. Sanitäres Einsetzteil (1), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, **dadurch gekennzeichnet, dass** eine stromabwärts (11) an die Reduzierstufe (2) anschließende Abflussöffnung (30) eine Einlaufrundung (32) aufweist.

25. Sanitäres Einsetzteil (1), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, **dadurch gekennzeichnet, dass** der Regelkörper (3) an seiner dem Regelprofil (4) zugewandten Seite und/oder an seiner dem Regelprofil (4) abgewandten Seite eine abgerundete Außenkante (34) aufweist.Sanitäres Einsetzteil (1), insbesondere nach einem der vorangehenden Ansprüche, mit einer Reduzierstufe, die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, **dadurch gekennzeichnet, dass** sich ein seitlich außerhalb des Regelkörpers (3) liegender Teil eines das Regelprofil (4) tragenden Gehäuses (35) höchstens bis zu einer zuströmseitigen Seite (37) des Regelkörpers (3) und/oder bis zu dem oder einem freien Ende (10) des oder eines Vorsprungs (5) erhebt.

26. Sanitäres Einsetzteil (1) nach einem der vorangehenden Ansprüche, **dadurch gekennzeichnet, dass** das Gehäuse (35) mindestens so hoch ist wie ein kürzester Regelvorsprung (13) .

27. Sanitäres Einsetzteil (1), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, **dadurch gekennzeichnet, dass** ein seitlich außerhalb des Regelkörpers (3) liegender Teil eines das Regelprofil (4) tragenden Gehäuses (35) an seinem Fuß eine zum Regelprofil (4) leitende Kehlung (36) ausbildet.

28. Sanitäres Einsetzteil (1), insbesondere nach einem der vorangehenden Ansprüche, mit einer Reduzierstufe (2), die einen scheibenförmigen, elastisch deformierbaren Regelkörper (3) aufweist, der quer zu seiner Scheibenform mit einem Regelprofil (4) zu einer Reduktion einer durch die Reduzierstufe (2) strömendes Wasser zusammenwirkt, **dadurch gekennzeichnet, dass** ein federelastisches Element (33) ausgebildet ist, das den Regelkörper (3) beaufschlagt und nach erfolgter Belastung wieder in eine Ausgangslage positioniert.
